# EUROPEAN PATENT SPECIFICATION

(11) **EP 3 040 571 B1**
(45) Date of publication and mention of the grant of the patent: **06.05.2020**
(21) Application number: 14153363.8
(22) Date of filing: 31.01.2014
(51) Int. Cl.: F16D 13/70, F16D 13/72, F16D 25/12, F16D 65/18, F16D 65/84, F16D 55/36, F16D 55/32, F16D 55/00, F16D 65/02

(54) **Brake Module**
Bremsmodul
Module de freinage

(43) Date of publication of application: 06.07.2016
(73) Proprietor: DTI Group B.V., 5653 LD Eindhoven (NL)
(72) Inventor: Druten, van, Roëll Marie, 5653 LD Eindhoven (NL); Serrarens, Alexander Franciscus Anita, 5653 LD Eindhoven (NL); Vroemen, Bas Gerard, 5653 LD Eindhoven (NL)
(74) Representative: V.O.

(56) References cited:
- EP-A1- 2 529 969
- CH-A- 363 861
- DE-B- 1 233 671
- FR-A- 1 055 608
- JP-A- 2008 126 883
- US-A- 2 699 850
- US-A- 2 893 524
- US-A1- 2012 255 826

## Description

### Technical filed of the invention

The invention relates to a brake module comprising:
- a heat sink, which is attached to a cooling body (transmission housing) for the purpose of discharging heat;
- a friction disc which is connected to a rotational member (for example, a transmission input shaft or a rotation body of a planetary gear train) which can rotate about the same axis as the friction disc, which friction disc on at least one side is provided with a lining and is faced with this side towards the heat sink; and
- an actuation system with which an axial pressing force on the friction disc can be exercised, in which the friction disc is located axially between the heat sink and the actuation system.

### Background of the invention

Such a brake module is generally known. In the known brake module the friction disc (on both sides provided with a lining) is located between two heat sinks and the pressure force is applied on one of the heat sinks. The discharge of heat of the axially movable heat sink is often the limiting factor of the performance of the brake or clutch.
Patent publication CH363861 in the name of Heinrich Gruenbaum discloses a assembly arranged to exert axial pressure on friction discs, for example in a brake or in a friction drive. A V-belt disc for two V-belts is rotationally arranged in between two axially movable friction discs each including a friction lining. A disadvantage of such an assembly is that a complex construction is required to sufficiently discharge heat.

### Summary of the invention

It is an object of the invention to provide a brake module of the type described in the opening paragraph in which the heat is better discharged than in the known module, and thus the brake or clutch can meet higher requirements in respect of braking power or torque transfer. To this end, the brake module according to the invention is characterized in that the cooling body is a transmission housing and no further heat sink, which during operation (braking) has a rotation speed difference with the friction disc, is present between the friction disc and the actuation system. Because no axially movable heat sink is present, all of the friction heat is discharged through the in the axial direction non-movable heat sink. Because the pressing force is exerted on the friction disc and not on an axially movable heat sink, it is sufficient to have only one heat sink, and non-complicated facilities can be used to discharge heat in a sufficient way. This construction is especially advantageous in case the brake module is equipped with a dry friction disc because in such a module the discharge of heat is more of an issue than in a wet environment.

The solid heat sink can be cooled well, because it is secured to the crankshaft or a housing part. The external cooling of an axially movable heat sink is always difficult. The axially movable heat sink in a dry plate brake is always the limiting factor for the heat capacity of the clutch or brake. With the brake module of the invention, the capacity can be increased with a factor of 3 due to the absence of the axially movable heat sink. The module can be a brake module in which the plate is a brake plate, the cooling body is the fixed world (for example, transmission housing), and the disc is a brake disc.

Preferably, the brake module further comprises a pressure plate, which is located axially between the friction disc and the actuation system, wherein the actuation system can exercise an axial pressure force on the pressure plate.

In this case the friction plate and the pressure plate are preferably fixed to one another in the direction of rotation, for example by means of a spline connection.

An embodiment of the brake module according to the invention is characterized in that the actuation system comprises actuation means (for example, a cylinder-piston combination, whether or not equipped with a lever), as well as an axial bearing (bearing with rolling elements, such as a ball bearing, needle roller bearing, thrust bearing, or a sliding bearing) which is present between the pressure plate and the actuation means. The actuation system can exert the axial force on the pressure plate from the fixed world. The axial bearing is preferably oil-lubricated or grease-lubricated and the dry friction material is preferably present in a dry environment, so that it does not need to be lubricated.

A further embodiment of the brake module according to the invention is characterized in that the brake module further comprises a further friction disc, which is also provided with a lining on at least one side and with this side is faced towards the heat sink, wherein the actuation system can exercise a further pressing force on the further friction disc, wherein the further friction disc is axially located between the heat sink and the actuation system and between the further friction disc and the actuation system there is no further heat sink, which during operation has a rotation speed difference with the friction disc.

In the above embodiment, the brake module preferably comprises a further pressure plate which is located axially between the further friction disc and the actuation means, wherein the actuation system can exercise an axial pressure force on the further pressure plate.

Yet a further embodiment of the brake module according to the invention is characterized in that the rotational member consists of or is connected to a first rotation body of an epicyclic gearing (e.g., a planetary gear train), wherein a second rotation body of the epicyclic gearing can be connected to a drive source and a third rotation body can be connected to wheels of a vehicle or an input shaft of a transmission, wherein the epicyclic gearing is non-lubricated or is lubricated by grease.

### Brief description of the drawings

The invention will be further elucidated below on the basis of drawings. These drawings show embodiments of the brake module according to the present invention. In the drawings:
Figure 1 is a basic embodiment of a brake module according to the invention;
Figures 2 and 3 show two embodiments, in which the actuation force of an actuator is transmitted to the friction disc through an axial bearing;
Figures 4 and 5 show two further embodiments, in which the actuation force of the actuator is transmitted to the friction disc through an axial bearing;
Figure 6 shows an embodiment, in which the axial force is transmitted to two friction wheels through a lever;
Figure 7 shows an embodiment, in which by means of a roller bearing, the axial force is transmitted to the pressure plate;
Figure 8 shows an embodiment of a brake module according to the invention;
Figures 9 and 10 show embodiments of a brake module, wherein the heat sink is located between two friction discs;
Figure 11 shows an embodiment in which a ring gear is connected to the heat sink;
Figure 12 shows an embodiment of a brake module according to the invention equipped with a clutch; and
Figure 13 is an alternative brake module, which is not part of the invention, with two cooling plates of which one is axially movable.

### Detailed description of the drawings

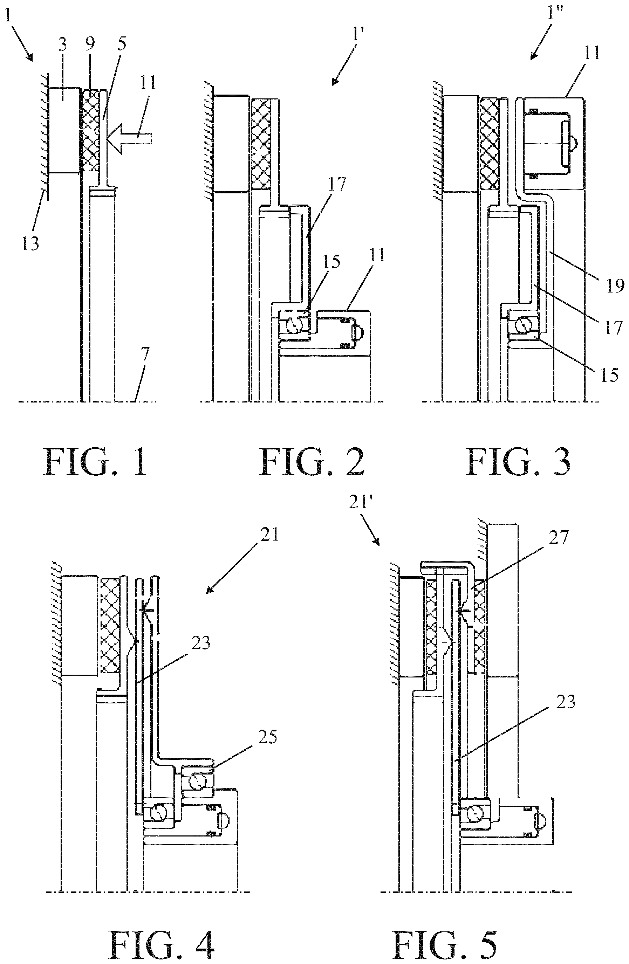

In Figure 1 a basic embodiment of the clutch and/or brake module according to the invention is shown, which module is designed as a brake module. The brake module 1 has a heat sink 3 which is attached to a cooling body for the purpose of discharging heat. The cooling body is a transmission housing. The brake module further has a brake disc 5 (friction disc), which is connected to a rotational member formed by a shaft 7 (schematically indicated by a center line). The brake disc is provided on one side with a lining 9, and faces with this side towards the heat sink 3. The brake is a dry brake and is not lubricated.

The brake module further has an actuation system 11 (cylinder with piston movable therein, schematically indicated by an arrow) which can exert an axial pressing force directly on the brake disc 5. The brake disc is located axially between the heat sink and the actuation system. The heat sink 3 is secured to a transmission housing 13, a part of which is schematically shown.

Figures 2 and 3 show two embodiments of the brake module 1' and 1" in which the actuation force of a plunger of the actuation system 11 is transmitted to the brake disc 5 through an axial bearing 15 and through a pressure plate 17. The thrust bearing is oil lubricated or grease lubricated. The plunger can be positioned on different radii by the use of an intermediate plate 19. The actuation system is such that from the fixed world the axial force can be exerted on the pressure plate.

Figures 4 and 5 show two further embodiments in which the force of the actuation system is transmitted on the friction disc through an axial bearing. In the brake modules 21 and 21', a lever 23 is provided which can increase the pressure force to the brake disc. In the embodiment shown in Figure 4 the reaction force is supported on a further thrust bearing 25 and in the embodiment shown in figure 5, the reaction force is supported on a second brake disc 27, which is tangentially coupled to the first disc, but is axially movable with respect to this brake disc.

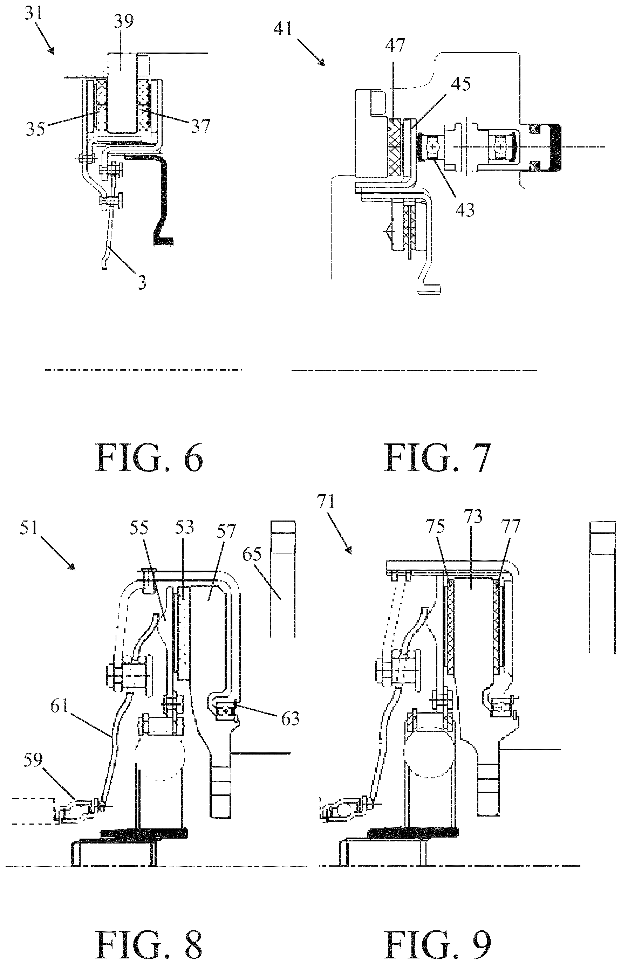

Figure 6 shows an embodiment of the brake module 31, in which the axial force on the two friction discs 35 and 37 is transmitted by means of a lever 33. In this embodiment the heat sink 39 is located between the two brake discs. The pressure plate can be activated by a compression spring, which increases the actuation force on the pressure plate.

Figure 7 shows an embodiment of the brake module 41, in which the axial force is transferred on the pressure plate 45 through a rolling bearing 43. The axis of rotation of the rolling bearing is (substantially) at right angles to the axis of rotation of the brake disc 47.

Figure 8 shows an embodiment of a brake module 51 in accordance with the invention. The clutch disc 53 is connected to a pressure plate 55 and the cooling plate 57 constitutes the heat sink of the brake. The axial force is applied to the pressure plate through a first axial bearing 59 and a lever 61. The reaction force is supported on the heat sink via a further axial bearing 63. The heat sink is attached to or is a part of an engine flywheel 65 of an internal combustion engine and is (or can be) attached to a crankshaft. The brake is closed when not energized.

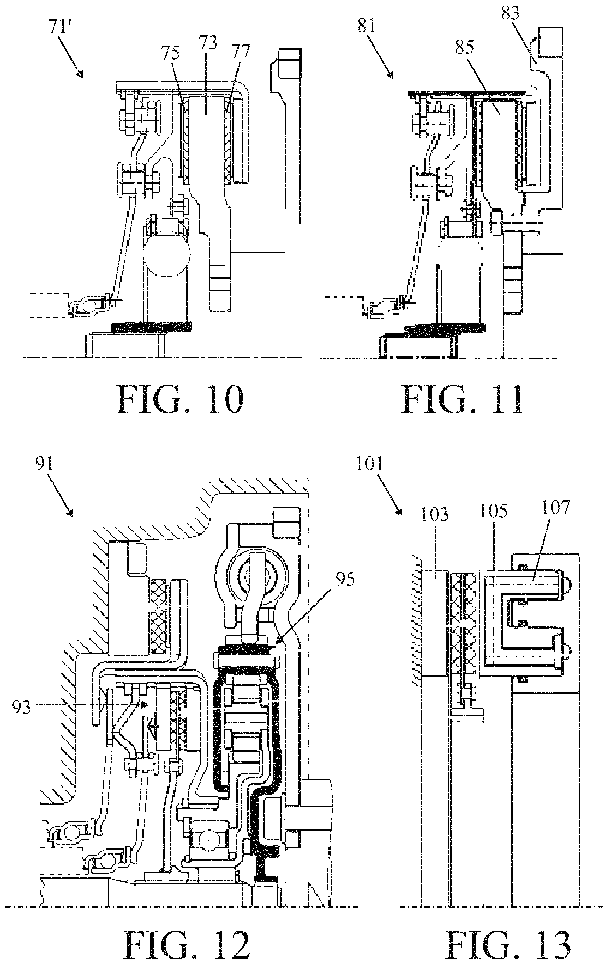

Figures 9 and 10 show embodiments of the brake module 71, 71', wherein the heat sink 73 is located halfway between two friction discs 75 and 77. The friction discs are tangentially connected with each other, and can move axially relative to each other. In the embodiment shown in Figure 9, in the non-actuated state the brake is closed and in the embodiment shown in Figure 10 in non-actuated state the brake is open.

Figure 11 shows an embodiment of the brake module 81 in which a ring gear 83 is connected to the heat sink 85. Between the ring gear and the heat sink a one way bearing/clutch may be present (for start-stop application). 95. The pressure plate is connected via an intermediate plate to a first rotation body of the planetary set, wherein a second rotation body of the planetary set is connected to a drive source and a third rotation body is connected to one of the wheels of a vehicle or to an input shaft of a transmission comprising at least two different ratios and being connected to one or more of the wheels of a vehicle. A clutch may be present between two rotation bodies of the epicyclic gearing. The planetary set is non-lubricated or grease lubricated.

Figure 13 shows an alternative brake module 101, which is not part of the invention represented by the two heat sinks 103 and 105 one of which is formed by an axially movable plunger. This plunger is cooled by a cooling liquid which also during the movement of the plunger continues to flow through a cooling channel 107 present in the plunger.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims.

## Claims

1. Dry brake module (1) comprising:
- a cooling body (13),
- a heat sink (3, 39, 57, 73, 85), which is attached to the cooling body for the purpose of discharging heat;
- a friction disc (5, 35, 37, 75, 77) which is connected to a rotational member (7) which can rotate about the same axis as the friction disc (5, 35, 37, 75, 77), which friction disc on at least one side is provided with a lining (9) and is faced with this side towards the heat sink (3, 39, 57, 73, 85); and
- an actuation system (11) with which an axial pressing force on the friction disc (5, 35, 37, 75, 77) can be exercised, in which the friction disc (5, 35, 37, 75, 77) is located axially between the heat sink (3, 39, 57, 73, 85) and the actuation system (11),
**characterized in that** the cooling body is a transmission housing (13) and no further heat sink, which during operation has a rotation speed difference with the friction disc (5, 35, 37, 75, 77), is present between the friction disc (5, 35, 37, 75, 77) and the actuation system (11).

2. Dry brake module (1) according to claim 1, **characterized in that** the clutch and/or brake module (1) further comprises a pressure plate (17, 45, 55), which is located axially between the friction disc (5, 35, 37, 75, 77) and the actuation system (11), wherein the actuation system (11) can exercise an axial pressure force on the pressure plate (17, 45, 55).

3. Dry brake module (1) according to claim 2, **characterized in that** the friction plate (5, 35, 37, 75, 77) and the pressure plate (17, 45, 55) are fixed to one another in the direction of rotation.

4. Dry brake module (1) according to claim 3, **characterized in that** the actuation system comprises actuation means, as well as an axial bearing (15, 59, 63) which is present between the pressure plate and the actuation means.

5. Dry brake module (1) according to any one of the preceding claims, **characterized in that** the clutch and/or brake module (1) further comprises a further friction disc, which is also provided with a lining (9) on at least one side and with this side is faced towards the heat sink (3, 39, 57, 73, 85), wherein the actuation system (11) can exercise a further pressing force on the further friction disc, wherein the further friction disc is axially located between the heat sink (3, 39, 57, 73, 85) and the actuation system (11) and between the further friction disc and the actuation system there is no further heat sink, which during operation has a rotation speed difference with the friction disc (5, 35, 37, 75, 77).

6. Dry brake module (1) according to claim 5, **characterized in that** the clutch and/or brake module comprises a further pressure plate (17, 45, 55) which is located axially between the further friction disc and the actuation means, wherein the actuation system (11) can exercise an axial pressure force on the further pressure plate (17, 45, 55).

7. Dry brake module (1) according to any one of the preceding claims, **characterized in that** the rotational member (7) consists of or is connected to a first rotation body of an epicyclic gearing, wherein a second rotation body of the epicyclic gearing can be connected to a drive source and a third rotation body can be connected to wheels of a vehicle or an input shaft of a transmission, wherein the epicyclic gearing is non-lubricated or is lubricated by grease.

## Patentansprüche

1. Trockenbremsmodul (1) bestehend aus:
- einem Kühlkörper (13),
- einer Wärmesenke (3, 39, 57, 73, 85), der zum Zwecke der Abgabe von Wärme am Kühlkörper angebracht ist;
- eine Reibscheibe (5, 35, 37, 75, 77), die mit einem Drehelement (7) verbunden ist, das sich um die gleiche Achse wie die Reibscheibe (5, 35, 37, 75, 77) drehen kann, wobei diese Reibscheibe auf wenigstens einer Seite mit einer Auskleidung (9) versehen ist und mit dieser Seite in Richtung der Wärmesenke (3, 39, 57, 73, 85) weist; und
- ein Betätigungssystem (11), mit dem eine axiale Druckkraft auf die Reibscheibe (5, 35, 37, 75, 77) ausgeübt werden kann, in dem sich die Reibscheibe (5, 35, 37, 75, 77) axial zwischen der Wärmesenke (3, 39, 57, 73, 85) und dem Betätigungssystem (11) befindet,
**dadurch gekennzeichnet, dass** der Kühlkörper ein Getriebegehäuse (13) ist und eine weitere Wärmesenke, die während des Betriebs eine Drehzahldifferenz zur Reibscheibe (5, 35, 37, 75, 77) aufweist, zwischen der Reibscheibe (5, 35, 37, 75, 77) und dem Betätigungssystem (11) vorhanden ist.

2. Trockenbremsmodul (1) nach Anspruch 1, **dadurch gekennzeichnet, dass** das Kupplungs- und/oder Bremsmodul (1) ferner eine Druckplatte (17, 45, 55) umfasst, die axial zwischen der Reibscheibe (5, 35, 37, 75, 77) und dem Betätigungssystem (11) befindet, wobei das Betätigungssystem (11) eine axiale Druckkraft auf die Druckplatte (17, 45, 55) ausüben kann.

3. Trockenbremsmodul (1) nach Anspruch 2, **dadurch gekennzeichnet, dass** die Reibscheibe (5, 35, 37, 75, 77) und die Druckplatte (17, 45, 55) in Drehrichtung aneinander befestigt sind.

4. Trockenbremsmodul (1) nach Anspruch 3, **dadurch gekennzeichnet, dass** das Betätigungssystem Betätigungsmittel sowie ein Axiallager (15, 59, 63) umfasst, das zwischen der Druckplatte und dem Betätigungsmittel vorhanden ist.

5. Trockenbremsmodul (1) nach einem der vorhergehenden Ansprüche, **dadurch gekennzeichnet, dass** das Kupplungs- und/oder Bremsmodul (1) ferner eine weitere Reibscheibe umfasst, die ebenfalls auf wenigstens einer Seite mit einer Auskleidung (9) versehen ist und mit dieser Seite in Richtung der Wärmesenke (3, 39, 57, 73, 85) weist, wobei das Betätigungssystem (11) eine weitere Druckkraft auf die weitere Reibscheibe ausüben kann, wobei sich die weitere Reibscheibe axial zwischen der Wärmesenke (3, 39, 57, 73, 85) und dem Betätigungssystem (11) befindet und sich zwischen der weiteren Reibscheibe und dem Betätigungssystem keine weitere Wärmesenke befindet, die während des Betriebs eine Drehzahldifferenz zu der Reibscheibe (5, 35, 37, 75, 77) aufweist.

6. Trockenbremsmodul (1) nach Anspruch 5, **dadurch gekennzeichnet, dass** das Kupplungs- und/oder Bremsmodul eine weitere Druckplatte (17, 45, 55) umfasst, die sich axial zwischen der weiteren Reibscheibe und dem Betätigungsmittel befindet, wobei das Betätigungssystem (11) eine axiale Druckkraft auf die weitere Druckplatte (17, 45, 55) ausüben kann.

7. Trockenbremsmodul (1) nach einem der vorhergehenden Ansprüche, **dadurch gekennzeichnet, dass** das Drehelement (7) aus einem ersten Drehkörper eines Umlaufrädergetriebes besteht oder mit diesem verbunden ist, wobei ein zweiter Drehkörper des Umlaufrädergetriebes mit einer Antriebsquelle verbunden sein kann und ein dritter Drehkörper mit Rädern eines Fahrzeugs oder einer Antriebswelle eines Getriebes verbunden sein kann, wobei das Umlaufrädergetriebe nicht geschmiert oder mit Fett geschmiert ist.

## Revendications

1. Module de frein à sec (1) comprenant :
- un corps de refroidissement (13),
- un dissipateur thermique (3, 39, 57, 73, 85), qui est fixé au corps de refroidissement dans le but d'évacuer la chaleur ;
- un disque de friction (5, 35, 37, 75, 77) qui est relié à un organe rotatif (7) qui peut tourner autour du même axe que le disque de friction (5, 35, 37, 75, 77), lequel disque de friction sur au moins un côté est pourvu d'une garniture (9) et avec ce côté est tourné vers le dissipateur thermique (3, 39, 57, 73, 85) ; et
- un système d'actionnement (11) avec lequel une force de pression axiale sur le disque de friction (5, 35, 37, 75, 77) peut être exercée, dans lequel le disque de friction (5, 35, 37, 75, 77) est situé axialement entre le dissipateur thermique (3, 39, 57, 73, 85) et le système d'actionnement (11),
**caractérisé en ce que** le corps de refroidissement est un carter de transmission (13) et aucun autre dissipateur thermique qui, pendant le fonctionnement, a une différence de vitesse rotation une avec le disque de friction (5, 35, 37, 75, 77), est présente entre le disque de friction (5,35,37, 75, 77) et le système d'actionnement (11).

2. Module de frein à sec (1) selon la revendication 1, **caractérisé en ce que** le module d'embrayage et/ou de frein (1) comprend en outre un plateau de pression (17, 45, 55), qui est situé axialement entre le disque de friction (5, 35, 37, 75, 77) et le système d'actionnement (11), dans lequel le système d'actionnement (11) peut exercer une force de pression axiale sur le plateau de pression (17, 45, 55).

3. Module de frein à sec (1) selon la revendication 2, **caractérisé en ce que** le disque de friction (5, 35, 37, 75, 77) et le plateau de pression (17, 45, 55) sont fixés l'un à l'autre en direction de la rotation.

4. Module de frein à sec (1) selon la revendication 3, **caractérisé en ce que** le système d'actionnement comprend des moyens d'actionnement, ainsi qu'un palier axial (15, 59, 63) qui est présent entre le plateau de pression et les moyens d'actionnement.

5. Module de frein à sec (1) selon l'une quelconque des revendications précédentes, **caractérisé en ce que** le module d'embrayage et/ou de frein (1) comprend en outre un autre disque de friction, qui est également pourvu d'une garniture (9) sur au moins un côté et avec ce côté est tourné vers le dissipateur thermique (3, 39, 57, 73, 85), dans lequel le système d'actionnement (11) peut exercer une force de pression supplémentaire sur le disque de friction supplémentaire, dans lequel le disque de friction supplémentaire est axialement situé entre le dissipateur thermique (3, 39, 57, 73, 85) et le système d'actionnement (11) et entre le disque de friction supplémentaire et le système d'actionnement, il n'y a pas d'autre dissipateur thermique qui, pendant le fonctionnement, présente une différence de vitesse de rotation avec le disque de friction (5, 35, 37, 75, 77).

6. Module de frein à sec (1) selon la revendication 5, **caractérisé en ce que** le module d'embrayage et/ou de frein comprend un autre plateau de pression (17, 45, 55) qui est situé axialement entre l'autre disque de friction et les moyens d'actionnement, dans lequel le système d'actionnement (11) peut exercer une force de pression axiale sur le plateau de pression supplémentaire (17, 45, 55).

7. Module de frein à sec (1) selon l'une quelconque des revendications précédentes, **caractérisé en ce que** l'organe rotatif (7) est constitué de, ou est relié à, un premier corps de rotation d'un engrenage épicycloïdal, dans lequel un deuxième corps de rotation de l'engrenage épicycloïdal peut être connecté à une source d'entraînement et un troisième corps de rotation peut être connecté aux roues d'un véhicule ou à un arbre d'entrée d'une transmission, dans lequel l'engrenage épicycloïdal est non lubrifié ou est lubrifié par de la graisse.
